# EUROPEAN PATENT SPECIFICATION

(11) **EP 1 585 311 B1**
(45) Date of publication and mention of the grant of the patent: **15.02.2012**
(21) Application number: 05252147.3
(22) Date of filing: 06.04.2005
(51) Int. Cl.: H04N 1/50

(54) **Method of preventing an image displacement**
Verfahren zur Verhinderung des Verschiebens eines Bildes
Procédé pour éviter le deplacement d'une image

(30) Priority: 08.04.2004 JP 2004113753
(43) Date of publication of application: 12.10.2005
(73) Proprietor: Ricoh Company, Ltd., Tokyo 143-8555 (JP)
(72) Inventor: Tanaka, Kimihiro, Ricoh Company, Ltd., Tokyo 143-8555 (JP)
(74) Representative: Leeming, John Gerard

(56) References cited:
- EP-A- 1 345 087
- JP-A- 9 179 372
- US-A- 5 960 237
- US-A1- 2002 034 401
- US-A1- 2003 016 965
- US-B1- 6 173 141

## Description

The present invention relates to an image forming apparatus configured to select a full-color mode for producing a full-color image and a monochrome mode for producing a monochrome image (i.e., black and white image), and more particularly to an image forming apparatus configured to adjust phases of image carriers after conducting an image forming operation with the full-color mode or monochrome mode.

Image forming apparatuses having the full-color mode for transferring color toner images and a black toner image from image carriers to a transfer member, and monochrome mode for transferring a black toner image from an image carrier to a transfer member have been known in public, and marketed as electro-photocopying apparatuses, printers, and facsimiles, etc., or as multi-functional apparatuses having at least one combination of the above-mentioned apparatuses (i.e., electro-photocopying apparatus, printer, and facsimile, etc.). The transfer member includes an intermediate transfer member, and a recording medium that will record and fix images thereon.

To prevent a color displacement in a full-color image formed on the transfer member (i.e., intermediate transfer member or recording medium) in the above-mentioned image forming apparatus, a predetermined phase relationship is required between color image carriers forming color image thereon and a black image carrier forming black image thereon. The phase relationship between the image carriers can be set by adjusting eccentricity positions of each of the image carriers, for example.

Hereinafter, for simplifying the expressions, the color image carriers and the black image carrier are collectively referred as "image carriers," as required.

During an image formation operation with the monochrome mode, the color image carriers stop rotating and disengage from the transfer member, and only the black image carrier rotates to form a black toner image thereon. Therefore, after the image forming operation with the monochrome mode, the predetermined phase relationship, which is set for the color image carriers and the black image carrier for the full-color mode, may deviate from the original setting.

Accordingly, after finishing the image forming operation with the monochrome mode, a phase aligning operation for aligning phases between the black image carrier and the color image carriers is conventionally conducted by adjusting a stop position of the black image carrier.

Such phase aligning operation can also be conducted after finishing the image forming operation with the full-color mode.

During the image forming operation with the full-color mode or monochrome mode, the image carriers rotate in one direction for forming toner images and transferring the toner images to the transfer member. After finishing the image forming operation, the image carriers stop rotating.

The image forming apparatus can be configured to rotate the image carriers in an inverse direction (i.e., opposite to image carriers' rotating direction for the image forming) after the image forming operation. When the image carriers rotate in the inverse direction, deposits (e.g., toners and paper powders) accumulated on an edge of a cleaning blade can be dropped so that the cleaning blade can remove toners remained on the image carrier effectively.

In such conventional arrangement, the image carriers rotate in an inverse direction after conducting the above-mentioned phase aligning operation, and then stop rotating. However, if the image carriers rotate in the inverse direction after conducting the above-mentioned phase aligning operation, the predetermined phase relationship between the color image carriers and black image carrier may deviate from an optimal position, resulting in a color displacement of the full-color image produced by a next image forming operation.

JP09179372 discloses an image forming device which can be operated in a full color mode or monochromatic mode, having different gears for driving drums for color and a drum for black. The gears are driven to reach a reference position to align the relative positions of the image of four colors.

US 6,173,141 B1 discloses an image forming apparatus comprising a plurality of color image carriers and a black image carrier in which the color image carriers and the black image carrier are synchronised in phase.

US 2002/0034401 A1 discloses a control device to control an image forming apparatus, and an image bearing member drive motor that rotates in forward and reverse direction to drive the image bearing member to rotate. This helps removing foreign substance from a leading edge of a cleaning blade.

The present invention provides an image forming apparatus having a configuration to select either one of a full-color mode or a monochrome mode.

In one exemplary embodiment, there is provided an image forming apparatus, having a configuration to select a full-color mode and a monochrome mode, comprising:
at least one color image carrier configured to rotate in a first direction to carry a color toner image thereon;
a black image carrier configured to rotate in the first direction to carry a black toner image thereon;
a transfer member configured to receive the color toner image and the black toner image thereon for the full-color mode, or the black toner image thereon for the monochrome mode;
a first driver configured to drive the at least one color image carrier;
a second driver configured to drive the black image carrier; and
a controller configured to control the first driver and the second driver,
wherein, in a case of the full-color mode, the controller controls the first driver and the second driver to stop the at least one color image carrier and the black image carrier after transferring the toner image to the transfer member, to rotate the at least one color image carrier and the black image carrier in a second direction, opposite to the first direction, and to conduct a phase aligning between the at least one color image carrier and the black image carrier when the at least one color image carrier and the black image carrier rotate in said second direction in order to maintain a predetermined phase relationship between the at least one color image carrier and the black image carrier.

According to the invention there is provided an image forming apparatus, having a configuration to select a full-color mode and a monochrome mode, comprising:
at least one color image carrier configured to rotate in a first direction to carry a color toner image thereon;
a black image carrier configured to rotate in the first direction to carry a black toner image thereon;
a transfer member configured to receive the color toner image and the black toner image thereon for the full-color mode, or the black toner image thereon for the monochrome mode;
a first driver configured to drive the at least one color image carrier;
a second driver configured to drive the black image carrier; and
a controller configured to control the first driver and the second driver,
wherein, in a case of the monochrome mode, the controller controls the second driver to stop the black image carrier after transferring the toner image to the transfer member, to rotate the black image carrier in a second direction, opposite to the first direction, and to conduct a phase aligning between the at least one color image carrier and the black image carrier when the black image carrier rotates in said second direction in order to maintain a predetermined phase relationship between the at least one color image carrier and the black image carrier.

According to a further aspect of the invention there is provided a method of preventing an image displacement in an image produced with an image forming apparatus having a configuration to select a full-color mode and a monochrome mode, the method comprising the steps of:
providing a first driving mechanism and a second driving mechanism, the first driving mechanism being configured to drive a plurality of color image carriers coupled to a plurality of gears with a first driver, and the second driving mechanism being configured to drive a black image carrier coupled to a gear with a second driver;
selecting the monochrome mode for an image forming operation;
disengaging the first driving mechanism from the image forming operation;
performing the image forming operation with the second driving mechanism while rotating the black image carrier in a first direction;
stopping the second driving mechanism;
driving the second driver to rotate the black image carrier in a second direction, opposite to the first direction;
increasing a revolution speed of the second driver step-wisely;
stabilizing the revolution speed of the second driver;
sensing a feeler provided to the gear coupled to the black image carrier; and
decreasing the revolution speed of the second driver step-wisely after a predetermined time has passed from the sensing step to stop the second driver so that the color image carriers and the black image carrier come to positions that release a predetermined phase relationship.

According to a further aspect of the invention there is provided a method of preventing an image displacement in an image produced with an image forming apparatus having a configuration to select a full-color mode and a monochrome mode, the method comprising the steps of:
providing a first driving mechanism and a second driving mechanism, the first driving mechanism being configured to drive a plurality of color image carriers coupled to a plurality of gears with a first driver, and the second driving mechanism being configured to drive a black image carrier coupled to a gear with a second driver;
selecting the full-color mode for an image forming operation;
performing the image forming operation with the first driving mechanism and the second driving mechanism while rotating the plurality of color image carriers and the black image carrier in a first direction;
stopping the first driving mechanism and the second driving mechanism;
driving the first driving mechanism and the second driving mechanism to rotate the plurality of color image carriers and the black image carrier in a second direction, opposite to the first direction;
increasing a revolution speed of the first driver and the second driver step-wisely;
stabilizing the revolution speed of the first driver and the second driver;
sensing a feeler provided to at least one of the plurality of gears coupled to the plurality of color image carriers, and another feeler provided to the gear coupled to the black image carrier; and
decreasing the revolution speed of the first driver and the second driver step-wisely after a predetermined time has passed from the sensing step to stop the first driver and the second driver so that the color image carriers and the black image carrier come to positions that realize a predetermined phase relationship.

A more complete appreciation of the disclosure and many of the attendant advantages and features thereof can readily be obtained and understood from the following detailed description with reference to the accompanying drawings, wherein:
FIG. 1 is a schematic sectional view of an image forming apparatus according to an exemplary embodiment of the present invention;
FIG. 2 is a schematic sectional view of an image forming apparatus in FIG. 1, in which color image carriers are disengaged from an intermediate transfer member;
FIG. 3 is a schematic view explaining a driving system for image carriers and an intermediate transfer member in.FIG. 1;
FIG. 4 is a schematic view explaining an image carrier and a corresponding gear;
FIG. 5 is a schematic chart explaining rotation of a driver (e.g., motor) used in an image forming operation and an inverse rotation operation;
FIG. 6A and 6B are schematic views explaining preferable signals, input to a driver (e.g., motor), used in an image forming operation and an inverse rotation operation;
FIG. 7 is a schematic view explaining a phase relationship between image carriers and gears; and
FIG. 8 is a schematic sectional view of an image forming apparatus according to another exemplary embodiment of the present invention.

In describing exemplary embodiments illustrated in the drawings, specific terminology is employed for the,sake of clarity. However, the disclosure of this present invention is not intended to be limited to the specific terminology so selected and it is to be understood that each specific element includes all technical equivalents that operate in a similar manner.

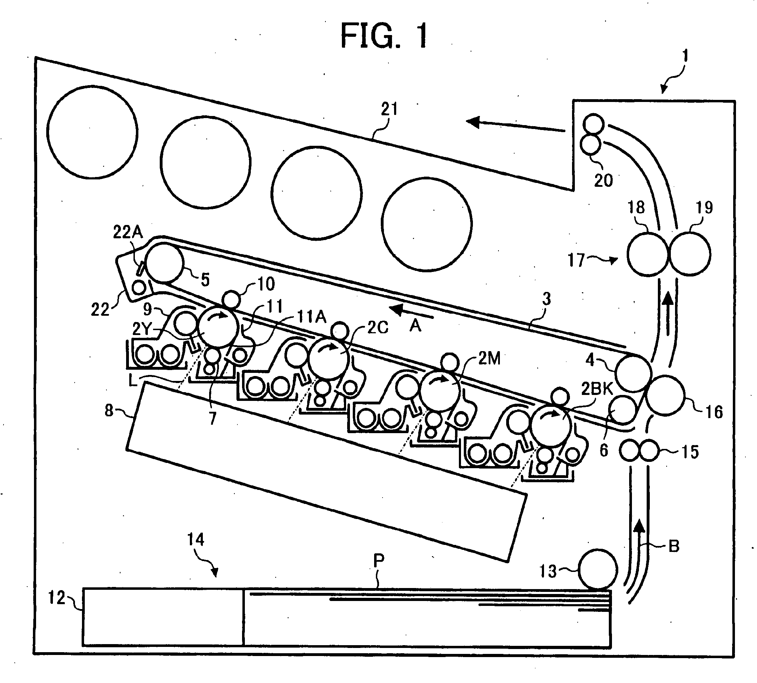

Referring now to the drawings, wherein like reference numerals designate identical or corresponding parts throughout the several views, and more particularly to FIG. 1 thereof, an image forming apparatus according to an exemplary embodiment of the present invention is described.

As shown in FIG. 1, an image forming apparatus 1 includes image carriers 2Y, 2C, 2M, and 2BK, an intermediate transfer member 3, an optical writing unit 8, a fusing unit 17, a sheet feed cassette 12, and a sheet feed unit 14.

Each of the image carriers 2Y, 2C, 2M, and 2BK is formed of a drum-shaped photoconductive member, and has a identical diameter with each other in the present invention.

The intermediate transfer member 3 is formed of an endless belt and extended by support rollers 4, 5 and 6.

Each of the image carriers 2Y, 2C, 2M, and 2BK rotate in a clockwise direction as shown in FIG. 1 while contacting surfaces of the image carriers 2Y, 2C, 2M, and 2BK to a surface of the intermediate transfer member 3

Each of the color image carriers 2Y, 2C, 2M is driven by a motor for color process (hereinafter, "first driver"), and the black image carrier 2BK is driven by and a motor for monochrome process (hereinafter, "second driver"), to be described later.

The intermediate transfer member 3 travels in an arrow direction "A" as shown in FIG. 1, wherein the intermediate transfer member 3 is driven by a third driver, to be described later.

A process for transferring toner images formed on each of the image carriers 2Y, 2C, 2M, and 2BK to the intermediate transfer member 3 is substantially similar one another except colors of the toner. Accordingly, a process for transferring a toner image formed on the image carrier 2 to the intermediate transfer member 3 is explained as a representative of the image carriers 2Y, 2C, 2M, and 2BK as below.

As shown in FIG. 1, the color image carrier 2Y is surrounded by a plurality of components to form a toner image on a surface of the color image carrier 2Y.

Such components include a charge roller 7, a developing unit 9, a first transfer roller 10, and a first cleaning unit 11 having a cleaning blade 11A.

When the color image carrier 2Y rotates in a clockwise direction, the charge roller 7 charges the color image carrier 2Y to a predetermined voltage.

A laser beam "L", modulated and emitted from the optical writing unit 8, scans the charged color image carrier 2Y to write an electrostatic latent image on the color image carrier 2Y.

The developing unit 9 develops the electrostatic latent image to form a yellow toner image on the surface of the color image carrier 2Y.

The first transfer roller 10 is provided to a position facing the color image carrier 2Y by sandwiching the intermediate transfer member 3 between the first transfer roller 10 and the color image carrier 2Y.

The first transfer roller 10, charged with a transfer voltage, transfers the toner image formed on the color image carrier 2Y to the intermediate transfer member 3 traveling in the arrow direction "A".

After the toner image transfer, the cleaning blade 11A contacts the surface of the color image carrier 2Y, and scrapes toners remained on the surface of the color image carrier 2Y to clean the surface of the color image carrier 2Y.

The above-described image forming processes is similarly conducted on each of the image carriers 2C, 2M, and 2BK to form a cyan toner image, a magenta toner image, and a black toner image, respectively.

These toner images are sequentially transferred to the intermediate transfer member 3 having a yellow toner image in advance to superimpose toner images on the intermediate transfer member 3.

After transferring the toner images, toners remaining on each of the image carriers 2C, 2M, and 2BK are removed by the first cleaning unit 11 as in the color image carrier 2Y.

As described above, each of the color image carriers 2Y, 2C, and 2M forms the corresponding color toner image thereon, and the black image carrier 2BK forms the black toner image thereon. These toner images are superimposingly transferred on the intermediate transfer member 3.

The intermediate transfer member 3 used as transfer member in the image forming apparatus 1 receives a toner image from the image carriers 2Y, 2C, 2M, and 2BK.

In a lower portion of the image forming apparatus 1, the sheet feed cassette.12 storing a recording medium P such as transfer sheet and resin sheet, and the sheet feed unit 14 having a feed roller 13 are provided as shown in FIG. 1.

When the feed roller 13 rotates, the recording medium P stored on the upper most position of the sheet feed cassette 12 is fed out in an arrow direction "B" shown in FIG. 1.

A registration roller 15 feeds the recording medium P to a space between a second transfer roller 16 and the intermediate transfer member 3 with a predetermined timing.

The second transfer roller 16, charged with a predetermined transfer voltage, transfers the superimposed toner images to the recording medium P from the intermediate transfer member 3.

The recording medium P is then fed to the fusing unit 17 having a fixing roller 18 and a pressure roller 19. When the recording medium P passes through a space between the fixing roller 18 and the pressure roller 19, the fixing roller 18 and the pressure roller 19 applies heat and pressure to the recording medium P to fuse and fix the toner image on the recording medium P.

After passing through the fusing unit 17, the recording medium P is ejected to an ejection tray 21 by an ejection roller 20.

Toners remaining on the intermediate transfer member 3 after the toner image transfer are removed by a second cleaning unit 22 having a second cleaning blade 22A.

The second cleaning blade 22A contacts the surface of the intermediate transfer member 3 and scrapes the toners remaining on the intermediate transfer member 3 to clean the surface of the intermediate transfer member 3.

Although the above-described processes are used for the full-color mode for forming full-color image on the recording medium P, the above-described processes can be applied similarly for the monochrome mode for forming a monochrome image (i.e., black and white image) on the recording medium P.

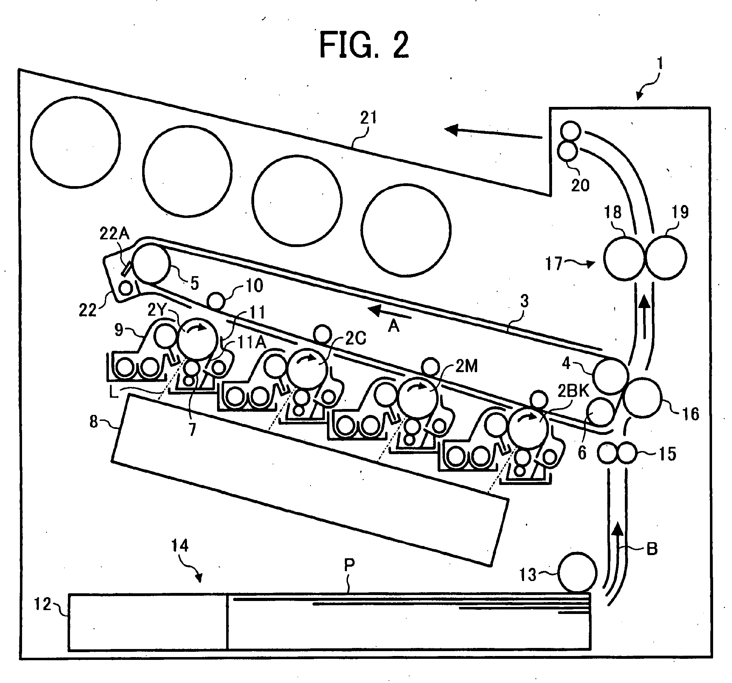

When conducting the monochrome mode in the image forming apparatus 1, each of the image carriers 2Y, 2C, and 2M disengages from the intermediate transfer member 3 as shown in FIG. 2, and only the image carrier 2BK engages with the intermediate transfer member 3. Accordingly, the image carriers 2Y, 2C, and 2M do not rotate, and only the image carrier 2BK rotates.

During the monochrome mode, a black toner image is formed on the image carrier 2BK with similar processes as in the full-color mode.

The toner image is transferred to the surface of the intermediate transfer member 3, traveling in the arrow direction "A", and further transferred on the recording medium P by the transfer roller 16, wherein the recording medium P is fed from the sheet feed unit 14, and then fed to a space between the second transfer roller 16 and the intermediate transfer member 3 with a predetermined timing as in the full-color mode.

The black toner image is fixed on the recording medium P when the recording medium P passes through the fusing unit 17, and then the recording medium P is ejected to the ejection tray 21.

As above-mentioned, the image carriers 2Y, 2C, and 2M disengage from the intermediate transfer member 3 and do not rotate in the monochrome mode. Consequently, the lifetime of the image carriers 2Y, 2C, and 2M can be prolonged.

After transferring the toner image from the image carriers 2Y, 2C, 2M, and 2BK to the intermediate transfer member 3 with the full-color mode or the monochrome mode, the image carriers 2Y, 2C, 2M, and 2BK and the intermediate transfer member 3 stop rotating.

Then the image carriers 2Y, 2C, 2M, and 2BK, and the intermediate transfer member 3 start an inverse operation, in which the image carriers 2Y, 2C, 2M, and 2BK, and the intermediate transfer member 3 rotate in an inverse direction at a relatively slower speed, wherein the inverse direction is opposite to the rotating direction of the image carriers 2Y, 2C, 2M, and 2BK, and the intermediate transfer member 3 during the image forming operation.

As for the full-color mode, the image carriers 2Y, 2C, 2M, and 2BK rotate in an counter-clockwise direction, and the intermediate transfer member 3 travels in an inverse direction (i.e., opposite to the arrow direction "A"), wherein the a surface linear velocity of each of the image carriers 2Y, 2C, 2M, and 2BK, and a surface linear velocity of the intermediate transfer member 3 are set to a substantially same level.

As for the monochrome mode, the black image carrier 2BK rotates in a counter-clockwise direction, and the intermediate transfer member 3 travels in an inverse direction (i.e., opposite to the arrow direction "A"), wherein a surface linear velocity of the black image carrier 2BK, and a surface linear velocity of the intermediate transfer member 3 are set to a substantially same level. During the monochrome mode, the color image carriers 2Y, 2C, and 2M do not rotate because the color image carriers 2Y, 2C, and 2M are disengaged from the image forming operation as above-described.

Accordingly, after transferring the toner image from the image carriers 2Y, 2C, 2M, and 2BK to the intermediate transfer member 3, the image carriers 2Y, 2C, 2M, and 2BK and the intermediate transfer member 3 stop rotating, and then the image carriers rotate in the counter-clockwise direction and the intermediate transfer member 3 travels in the inverse direction for the full-color mode and the monochrome mode in the present invention.

The image carriers 2Y, 2C, 2M, and 2BK rotate in the counter-clockwise direction to drop deposits (e.g., toners and paper powders) accumulated on edges of the first cleaning blade 11A so that the first cleaning blade 11A can remove deposits (e.g., toners and paper powders) from the surfaces of the image carriers 2Y, 2C, 2M, and 2BK effectively.

Similarly, the intermediate transfer member 3 travels in the inverse direction to drop deposits (e.g., toners and paper powders) accumulated on edges of the second cleaning blade 22A so that the second cleaning blade 22A can remove deposits (e.g., toners and paper powders) from the surface of the intermediate transfer member 3 effectively.

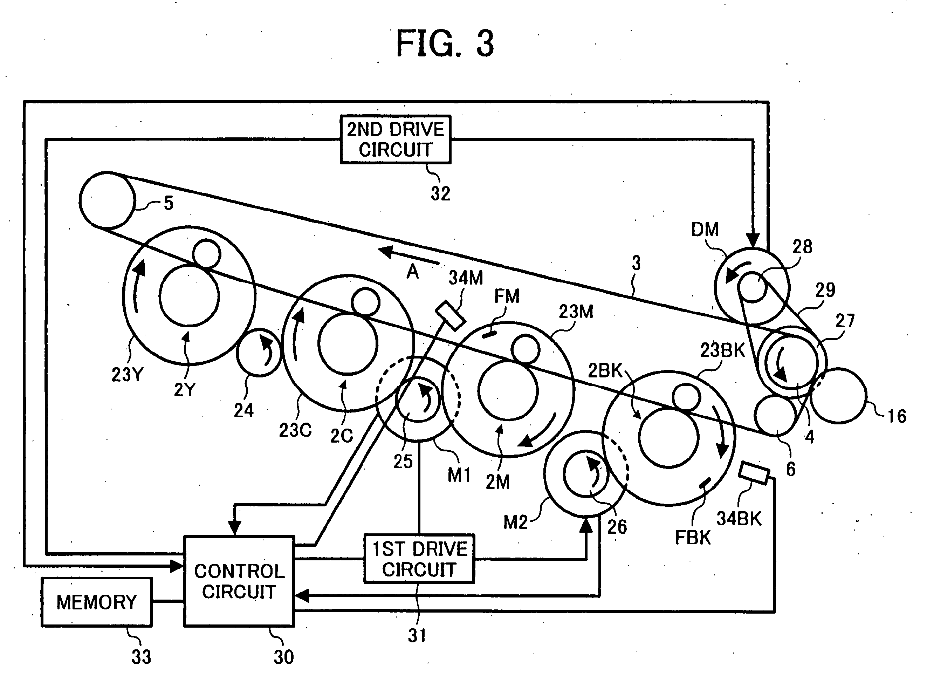

As shown in FIG. 3, the image carriers 2Y, 2C, 2M, and 2BK are coupled concentrically to respective gears 23Y, 23C, 23M, and 23BK, wherein the gears 23Y, 23C, 23M, and 23BK have a same diameter and a same number of teeth one another.

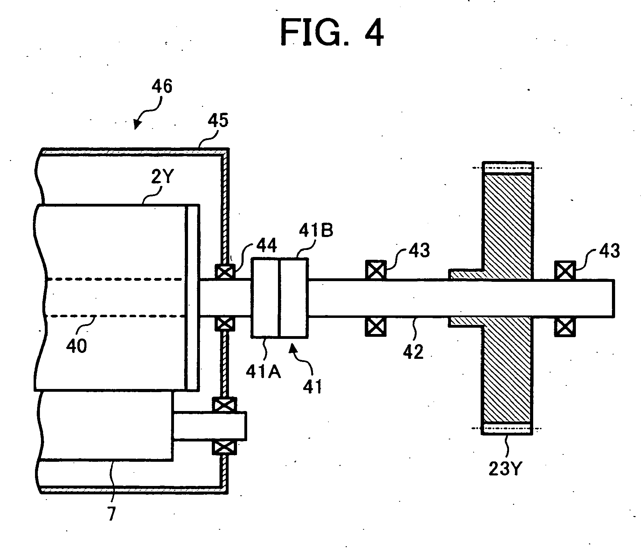

FIG. 4 is a schematic view explaining an arrangement of the image carriers 2Y, 2C, 2M, and 2BK, and the respective gears 23Y, 23C, 23M, and 23BK.

FIG. 4 shows only the image carriers 2Y and the gear 23Y because the image carriers 2Y, 2C, 2M, and 2BK, and the respective gears 23Y, 23C, 23M, and 23BK employs a substantially same configuration one another.

Although the gear 23Y can be made of any materials such as metal and resin, the gear 23Y are made of resinous material in the present invention.

As shown in FIG. 4, the image carrier 2 has an image-carrier shaft 40, which is concentrically fixed with the image carrier 2Y, and detachably coupled to a drive shaft 42 via a joint section 41, wherein the joint section 41 includes a first joint member 41A on the image carrier 2Y side and a second joint member 41B on the gear 23Y side.

As shown in FIG. 4, the gear 23Y is fixed to the drive shaft 42.

The drive shaft 42 is rotateably supported by a frame (not shown) of the image forming apparatus 1 via a first bearing 43, and aligned concentrically with the image-carrier shaft 40.

As shown in FIG. 4, an image-carrier casing 45 rotateably supports the image-carrier shaft 40 via a second bearing 44, and also supports the charge roller 7.

As shown in FIG. 4, a process cartridge 46 includes at least the image carrier 2Y, the image-carrier shaft 40, the charge roller 7, and the image-carrier casing 45.

The process cartridge 46 is detachably provided to the image forming apparatus 1. When detaching the process cartridge 46, the first joint member 41A and the second joint member 41B are detached.

As shown in FIG. 3, an intermediate gear 24 is meshed with the gear 23Y coupled to the color image carrier 2Y, and the gear 23C coupled to the color image carrier 2C.

Accordingly, the gears 23Y and 23C interlinkingly rotate with each other via the intermediate gear 24.

As shown in FIG. 3, a first output gear 25, fixed to an output shaft of the first driver M1, is meshed with the gear 23C coupled to the color image carrier 2C, and the gear 23M coupled to the color image carrier 2M.

Accordingly, the first output gear 25 drives the gears 23C and 23M.

A second output gear 26, fixed to an output shaft of second driver M2, is meshed with the gear 23BK coupled to the image carrier 2BK.

Accordingly, the second output gear 26 drives the gear 23BK.

When the first driver M1 is activated, the first output gear 25 rotates in a counter-clockwise direction.

Then, the gears 23C and 23M, meshed with the first output gear 25, rotate in a clockwise direction.

Then, the color image carriers 2C and 2M rotate in the clockwise direction with the gears 23C and 23M at a same revolution speed.

In addition, when the gear 23C rotates in a clockwise direction, the intermediate gear 24 rotates in a counter-clockwise direction.

Then, the first gear 23Y meshed to the intermediate gear 24 rotates in a clockwise direction.

Accordingly, the color image carrier 2Y rotates in a same direction with the gear 23Y at a same revolution speed.

In the above mentioned arrangement, the color image carrier 2Y, 2C and 2M rotate at a same revolution speed.

When the second driver M2 is activated, the second output gear 26 rotates in a counter-clockwise direction, and the gear 23BK meshed to the second output gear 26 rotates in a clockwise direction.

Accordingly, the black image carrier 2BK rotates with the gear 23BK in a clockwise direction at a same revolution speed.

As shown in FIG. 3, a timing mechanism is configured with a first timing pulley 27, a second timing pulley 28, a timing belt 29, an output shaft of the third driver DM, wherein the third driver DM includes a motor, for example.

The support roller 4 is integrally linked to the first timing pulley 27 concentrically arranged with the support roller 4.

The second timing pulley 28 is fixed to the output shaft of the third driver DM.

The first timing pulley 27 and the second timing pulley 28 extend the timing belt 29 of endless type.

When the third driver DM is activated, the second timing pulley 28 rotates in a counter-clockwise direction.

The rotation of the timing pulley 28 is transmitted to the first timing pulley 27 via the timing belt 29.

Then the support roller 4 rotates with the first timing pulley 27 in a counter-clockwise direction at a same revolution speed.

Consequently, the intermediate transfer member 3 travels in the arrow direction "A" shown in FIG. 3.

The above-mentioned image forming operation is conducted by using rotations of the image carriers 2Y, 2C, 2M, and 2BK, and the intermediate transfer member 3.

As shown in FIG. 3, a control circuit 30 controls rotation of the drivers M1, M2, and DM as a whole, while a first drive circuit 31 controls the drivers M1, M2, and a second drive circuit 32 controls the driver DM.

For simplifying the expressions, the first driver M1, the second driver M2, and the third driver DM are collectively referred as "drivers M1, M2, and DM" and "drivers M1 and M2" or individually referred as "driver M1," "driver M2", and "driver DM," as required.

The drivers M1, M2, and DM can employ any type including a stepping motor and a DC (direct current) brushless motor, for example. Preferably, the DC brushless motor is used for the drivers M1, M2, and DM. Compared to the stepping motor, the DC brushless motor can reduce the noise level and power consumption of the motor.

In view of such advantages, the drivers M1, M2, and DM in the image forming apparatus 1 preferably employ the DC brushless motors, controlled (i.e., instructed) by clock signals.

The image forming apparatus 1 includes a memory 33 shown in FIG. 3 for storing data of a predetermined velocity curve.

The control circuit 30 outputs clock signals, corresponding to the velocity curve data stored in the memory 33, to the drivers M1, M2, and DM (e.g., DC brushless motors) to rotate the drivers M1, M2, and DM at revolution speeds corresponding to pulse number of the clock signals.

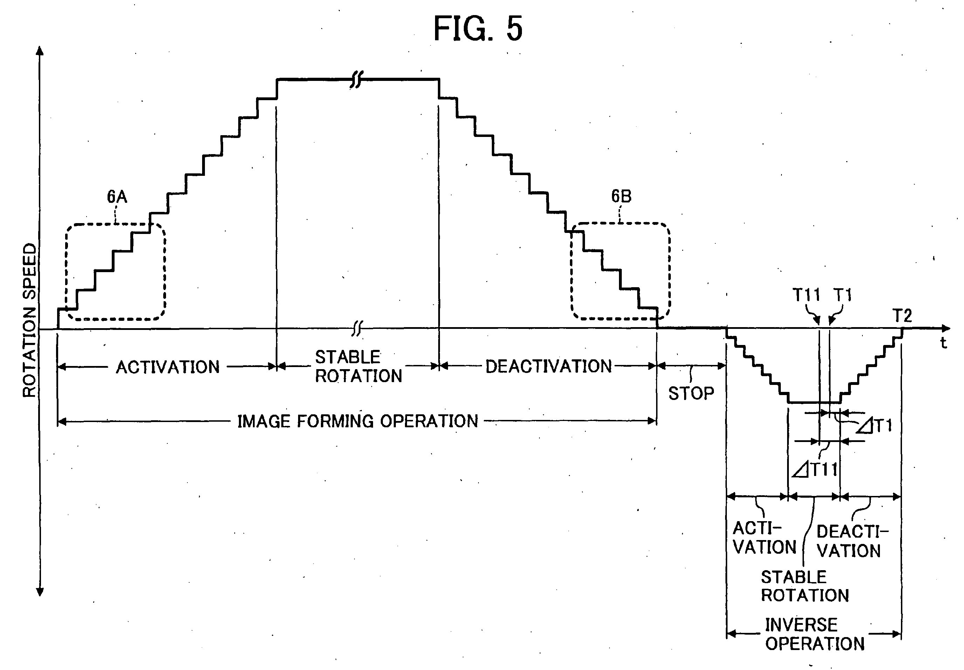

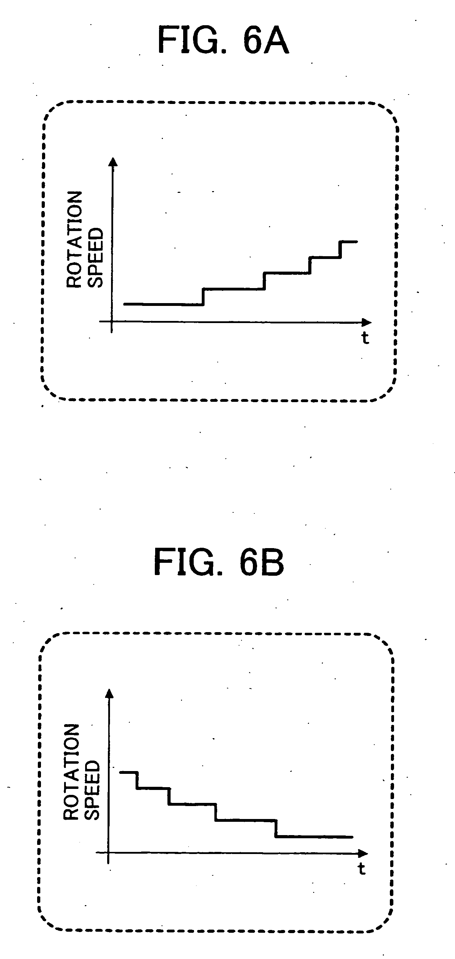

The revolution speed of the driver M1 and the driver M2 are controlled as shown in FIGs. 5, 6A, and 6B.

When the image forming operation is activated, gradually increasing clock signals, which instruct pulse numbers, control the rotations of the drivers M1 and M2 so that the revolution speed of the drivers M1 and M2 increase step-wisely.

When the image forming operation enters in a stable condition, clock signals instructing substantially similar pulse numbers control the rotations of the drivers M1 and M2 so that the revolution speed of the drivers M1 and M2 are maintained at a substantially same level. During such stable condition, toner images are formed on image carriers, then transferred to the intermediate transfer member 3, and further transferred to the recording medium P.

When the image forming operation is deactivated, gradually decreasing clock signals, which instructs pulse numbers, control the rotations of the drivers M1 and M2 so that the revolution speed of the drivers M1 and M2 decrease step-wisely, and then the drivers M1, M2, and DM stop.

After temporal stopping of the drivers M1, M2, and DM, the drivers M1, M2, and DM start an inverse operation, in which the drivers M1, M2, and DM rotate in an inverse direction, which is opposite to the direction used for the image forming operation.

When the inverse operation is activated, gradually increasing clock signals, which instruct pulse numbers, control the rotations of the drivers M1 and M2 so that the revolution speed of the drivers M1 and M2 increase step-wisely.

When the inverse operation enters in a stable condition, clock signals instructing substantially similar pulse numbers control the rotations of the drivers M1 and M2 so that the revolution speed of the drivers M1 and M2 are maintained at a substantially same level.

When the inverse operation is deactivated, gradually decreasing clock signals, which instructs pulse numbers, control the rotations of the drivers M1 and M2 so that the revolution speed of the drivers M1 and M2 decrease step-wisely.

By controlling the drivers M1, M2, and DM (e.g., the DC brushless motors) as above-mentioned, a surface linear velocity of the color image carriers 2Y, 2C, 2M, a surface linear velocity of the black image carrier 2BK, and a surface linear velocity of the intermediate transfer member 3 can be maintained at a substantially same level during the activation, stable condition, and deactivation periods.

Accordingly, damages on the surfaces of the image carriers 2Y, 2C, 2M, 2BK, and the intermediate transfer member 3 caused by friction force between the image carriers 2Y, 2C, 2M, 2BK and the intermediate transfer member 3 can be effectively minimized.

FIG. 6A shows a case that a time period for each revolution speed level, increasingly step-wisely, is set to become shorter as the time goes by during the activation period of the drivers M1, M2, and DM.

FIG. 6B shows a case that a time period for each revolution speed level, decreasingly step-wisely, is set to become longer as the time goes by during the deactivation period of the drivers M1, M2, and DM.

When the drivers M1, M2, and DM are controlled with the methods shown in FIGs. 6A and 6B, the revolution speed of the drivers M1, M2, DM can be increased or decreased stabley.

The gears 23Y, 23C, 23M, and 23BK made of resinous material inherently have some eccentricity therein. Such eccentricity may lead to a color displacement on toner images superimposingly transferred from the image carriers 2Y, 2C, 2M, and 2BK to the intermediate transfer member 3.

To prevent such color displacement, the gears 23Y, 23C, 23M, and 23BK, and the respective image carriers 2Y, 2C, 2M, and 2BK are coupled each other with a predetermined phase relationship with respect to circumferential positions of the gears and image carriers.

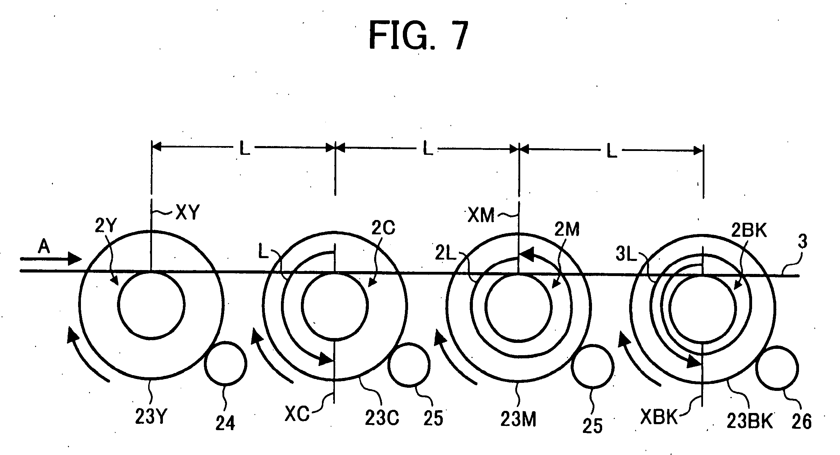

FIG. 7 is a schematic view explaining a phase relationship adjustment between the image carriers 2Y, 2C, 2M, and 2BK, wherein the image carriers 2Y, 2C, 2M, and 2BK are coupled to the gears 23Y, 23C, 23M, and 23BK, respectively.

As shown in FIG. 7, the transfer position of each of the adjacent image carriers 2Y, 2C, 2M, and 2BK are spaced apart with a same distance "L."

In FIG. 7, reference characters "XY, XC, XM, and XBK" indicate reference positions on circumferential direction of the image carriers 2Y, 2C, 2M, and 2BK coupled to the gears 23Y, 23C, 23M, and 23BK, respectively.

Specifically, a circumferential position having a maximum radius of the gear 23Y and a circumferential position having a maximum radius of the image carrier 2Y are aligned on a same position and such position is referred as the reference position of "XY."

Similarly, the reference positions of "XY, XC, and XM" are set for the gears 23C, 23M, 23BK and the image carriers 2C, 2M, 2BK.

In FIG. 7, the reference position "XY" of the image carrier 2Y is at a transfer position, and the yellow toner image on the image carrier 2Y is transferred to the intermediate transfer member 3 at the transfer position.

At this time, the reference position "XC" of the image carrier 2Y, next to the image carrier 2C, is at a position, substantially distancing from the transfer position of the image carrier 2Y with a distance of "L" as shown in FIG. 7.

Similarly, the reference position "XM" of the image carrier 2M is substantially distancing from the transfer position of the image carrier 2Y with a distance of two times of L (i.e., 2 x L), and the reference position "XBK" of the image carrier 2BK is substantially distancing from the transfer position of the image carrier 2Y with a distance of three times of L (i.e., 3 x L).

The intermediate gear 24 meshes with the gears 23Y and 23C, the first output gear 25 meshes with the gears 23C and 23M, and the second output gear 26 meshes with the gears 23BK at positions shown in FIG. 3.

For the convenience of the explanation, the intermediate gear 24 meshes with the gear 23Y, the first output gear 25 meshes with the gears 23C and 23M, and the second output gear 26 meshes with the gear 23BK at substantially same circumferential positions of the gears 23Y, 23C, 23M, and 23BK as shown in FIG. 7.

When the phases of circumferential position of the gears 23Y, 23C, 23M, 23BK and the image carriers 2Y, 2C, 2M, 2BK are set as above-mentioned, and the mesh position between the intermediate gear 24, the first output gear 25, the second output gear 26 and the gears 23Y, 23C, 23M are set as above-mentioned, an color displacement on the superimposed toner images transferred on the intermediate transfer member 3 can be prevented even if a slight eccentricities exist in the gears 23Y, 23C, 23M, and 23BK.

In FIG. 3, the phases of the image carriers 2Y, 2C, 2M, 2BK, and the gears 23Y, 23C, 23M, 23BK, and the mesh positions between the intermediate gear 24, the first output gear 25, the second output gear 26, and the gears 23Y, 23C, 23M, 23BK are arranged in a manner so that an effect explained in FIG. 7 can be obtained.

In other words, installation positions of the gears 23Y, 23C, 23M, and 23BK are set such that a color displacement does not occur in a full-color image.

As described above, the image forming apparatus 1 obtains a full-color image using a full-color mode.

In the full-color mode, the first driver M1 drives the color image carriers 2Y, 2C, and 2M, and the second driver M2 drives the black image carrier 2BK. Then, the color toner images formed on the color image carriers 2Y, 2C, and 2M, and the black toner image formed on the black image carrier 2BK are transferred to the intermediate transfer member 3 to obtain a full-color image.

In the monochrome mode, the second driver M2 drives the black image carrier 2BK while the color image carriers 2Y, 2C, and 2M are stopped and disengaged from the intermediate transfer member 3. The black toner image formed on the black image carrier 2BK is transferred to the intermediate transfer member 3 to obtain a monochrome image (i.e., black and white image).

The full-color mode and the monochrome mode can be switched in image forming apparatus 1.

When the monochrome mode is conducted, the gears 23Y, 23C, 23M and the color image carriers 2Y, 2C, 2M stop rotating, and only the gear 23BK and the black image carrier 2BK rotate.

Accordingly, after conducting the image forming operation with the monochrome mode, the predetermined phase relationship between the circumferential positions of the gears 23Y, 23C, 23M, and 23BK, which is explained with FIG. 7, cannot be maintained.

As for the image forming apparatus 1, a phase aligning operation is conducted when the image carriers rotate in a counter-clockwise direction (i.e., inverse direction) so that the color image carriers 2Y, 2C, and 2M and the black image carrier 2BK can maintain a predetermined phase relationship.

Such phase aligning operation may be conducted only after the image forming operation with the monochrome mode, but may also be conducted after the image forming operation with the full-color mode.

The image forming apparatus 1 is configured to conduct the phase aligning operation after both of the full-color mode and the monochrome mode. With such phase aligning operation, the image carriers 2Y, 2C, 2M, and 2BK can be maintained at a predetermined phase relationship with a higher precision.

The phase aligning operations can be conducted with a method as explained as below, for example.

As shown in FIG. 3, a first feeler FM is provided to the gear 23M coupled to the image carrier 2M for forming magenta toner image, and a second feeler FBK is provided to the gear 23BK coupled to the black image carrier 2BK for forming black toner image.

A first sensor 34M and a second sensor 34BK are provided to the image forming apparatus 1 to detect the first feeler FM and the second feeler FBK, respectively. Theses sensors 34M and 34BK may be a photo-sensor, for example.

After finishing the image forming operation with the full-color mode, the drivers M1, M2, and DM conduct an inverse operation as shown in FIG. 5. In FIG. 5, the vertical axis represents the rotation speed of the motor, and the horizontal axis represents the time.

As shown in FIG. 5, during the stable rotation period of the drivers M1 and M2 in the inverse operation, the first sensor 34M detects the first feeler FM at a time "T1," for example.

After a first predetermined time ΔT1 has passed from the time "T1," pulse numbers of clock signals transmitted to the first driver M1 start to decrease, and the first driver M1 stops at a time "T2," for example.

Similarly, during the stable rotation period of the drivers M1 and M2 in the inverse operation, the second sensor 34BK detects the second feeler FBK at a time "T11," for example.

After a second predetermined time ΔT11 has passed from the time "T11," pulse numbers of clock signals transmitted to the second driver M2 start to decrease, and the second driver M2 stops at the time "T2," for example.

The above-mentioned predetermined time ΔT1 and ΔT11 are set in advance with values, by which the image carriers 2Y, 2C, 2M and 2BK comes to positions to realize a predetermined phase relationship explained with FIG. 7 when the drivers M1 and M2 stop.

The first predetermined time ΔT1 and the second predetermined time ΔT11 can be set to different values or a same value. The first predetermined time ΔT1 and the second predetermined time ΔT11 can also be set to a value of zero.

When the image forming operation is conducted with the monochrome mode, the color image carriers 2Y, 2C, and 2M stop rotating. Therefore, only the black image carrier 2BK conducts an inverse operation.

Similarly to the inverse operation after the image forming operation with the full-color mode, during the stable rotation period of the drivers M2 in the inverse operation after the image forming operation, the second sensor 34BK detects the second feeler FBK at a time "T3" (not shown), for example.

After a third predetermined time ΔT33 (not shown) has passed from the time "T3," pulse numbers of clock signals transmitted to the second driver M2 start to decrease, and the second driver M2 stops at the time "T4" (not shown)," for example.

The above-mentioned third predetermined time ΔT33 is set in advance with values, by which image carriers 2Y, 2C, 2M and 2BK comes to positions to realize a predetermined phase relationship explained with FIG. 7 when the driver M2 stop, wherein the image carriers 2Y, 2C, 2M stop rotating during the monochrome mode.

As for the full-color mode, if the first predetermined time ΔT1 and the second predetermined time ΔT11 are adequately changed in each time after the image forming operation with the full-color mode, the color image carriers 2Y, 2C, and 2M and black image carrier 2BK, which finish the inverse operation, stop at positions different from start positions of the color image carriers 2Y, 2C, 2M and 2BK, wherein the start position mean a position before starting the image forming operation with the full-color mode.

When an phase aligning operation is conducted with the above-described manner after finishing the image forming operation with the full-color mode, a predetermined phase relationship between the image carriers 2Y, 2C, 2M and 2BK are maintained while the image carriers 2Y, 2C, 2M, and 2BK stop at the positions different from the start positions of the image carriers 2Y, 2C, 2M and 2BK.

If the image carriers 2Y, 2C, 2M and 2BK always stop at same positions, same circumferential surfaces of the image carriers 2Y, 2C, 2M and 2BK always contact the intermediate transfer member 3. In such a case, the circumferential surfaces repeatedly receives frictional forces from the intermediate transfer member 3, thereby the circumferential surfaces the image carriers 2Y, 2C, 2M and 2BK may be worn and damaged.

However, by differentiating the stop position after the inverse operation as described above, the surfaces of the image carriers 2Y, 2C, 2M, and 2BK can be prevented from wearing and damaging.

The image forming apparatus 1 can employ a configuration that the phase aligning operation is conducted only after the image forming operation with the monochrome mode.

If the image forming apparatus 1 does not employ a configuration that the phase aligning operation can be conducted after the image forming operation with the full-color mode, the first driver M1 and the second driver M2 needs to be synchronized with a higher precision level for adjusting the starting and stopping position of the first driver M1 and the second driver M2 after an image forming operation with the full-color mode to maintain a predetermined phase relationship, resulting in a complex adjustment.

As above-mentioned, the image forming apparatus 1 includes a configuration capable of conducting a phase aligning operation for both of the full-color mode and monochrome mode.

A program including computer-readable instructions that, when executed by a computer of an image forming apparatus, instructs the image forming apparatus 1 to carry out the above-described phase aligning, and such computer-readable instructions can be stored in a computer-readable medium provided in the image forming apparatus 1.

By conducting the above-mentioned phase aligning operation, a color displacement in a full-color image can be prevented.

Furthermore, the above-mentioned phase aligning operation can be conducted in a higher precision level because the phase aligning operation is conducted during the inverse operation of the drivers M1, M2, and DM.

A conventional image forming apparatus has a configuration that phases of the image carriers are adjusted using a reference timing, wherein the reference timing is a time when a first sensor for color image carrier and a second sensor for a black image carrier detect a first feeler for color image carrier and a second feeler for a black image carrier during an image forming operation. After such adjustment, the image carriers are rotated in an inverse direction and stopped. The image carriers are rotated in the inverse direction to drop deposits (e.g., toners and paper powders) accumulated on edges of a cleaning blade so that the cleaning blade can remove deposits (e.g., toners and paper powders) from the surfaces of the image carriers effectively.

Accordingly, a predetermined phase relationship between the image carriers may not be adequately maintained, and such condition may affect the next image forming operation, thereby the image carries are further rotated before the next image forming operation to maintain the predetermined phase relationship.

The image forming apparatus 1 according to an exemplary embodiment of the present invention can prevent such drawback as described above.

In the above discussion, the image forming apparatus 1 employs the intermediate transfer member 3 as transfer member.

In addition to the intermediate transfer member 3, an image forming apparatus can employ a recording medium as transfer member which directly receives toner images from image carriers 2Y, 2C, 2M, and 2BK, wherein the recording medium is transported by a recording medium transporter, and such image forming apparatus can apply the above-mentioned configuration for phase aligning operation.

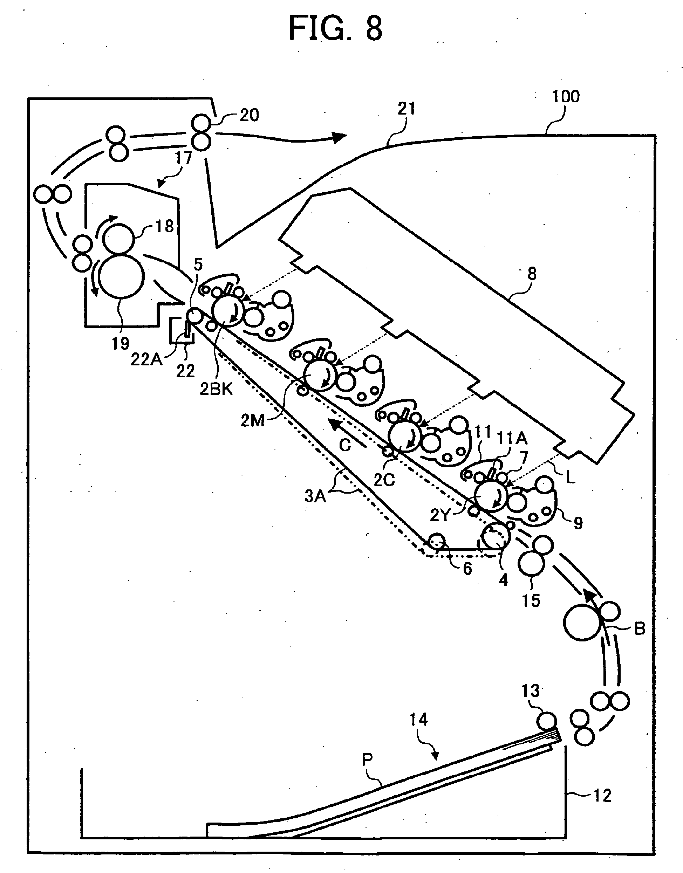

FIG. 8 is a schematic sectional view of an image forming apparatus according to another exemplary embodiment of the present invention.

As shown in FIG. 8, an image forming apparatus 100 includes a substantially similar configuration as in the image forming apparatus 1 in FIG. 1 except a recording medium transporter 3A made of endless belt extended by the support rollers 4, 5 and 6.

The image carriers 2Y, 2C, 2M, and 2BK having a same diameter rotate in a clockwise direction. The recording medium transporter 3A travels in an arrow direction "C" while contacting the image carriers 2Y, 2C, 2M, and 2BK.

Similar to the image forming apparatus 1 in FIG. 1, a yellow toner image, cyan toner image, magenta toner image and black toner image are respectively formed on the image carriers 2Y, 2C, 2M, and 2BK of the image forming apparatus 100.

The recording medium P, fed from the sheet feed unit 14 and transported by the recording medium transporter 3A, sequentially passes through transfer positions at the image carriers 2Y, 2C, 2M, and 2BK to superimposingly receive toner images from the image carriers 2Y, 2C, 2M, and 2BK.

Such superimposed toner images are fixed on the recording medium P when the recording medium P passes through the fusing unit 17. The recording medium P, passed through the fusing unit 17, is ejected to the ejection tray 21.

Deposits (e.g., toners and paper powders) adhered on the surface of the recording medium transporter 3A are scraped and removed by the second cleaning blade 22A of the second cleaning unit 22.

The image forming apparatus 1 in FIG. 1 employs an intermediate transferring method, in which a toner image on an image carrier is transferred to the intermediate transfer member 3 at once, and then transferred to the recording medium P.

On one hand, the image forming apparatus 100 in FIG. 8 employs a direct transferring method, in which a toner image on an image carrier is directly transferred to the recording medium P.

Although not shown in FIG. 8, a driver (e.g., motor) for driving the recording medium transporter 3A, a first driver for driving the color image carriers 2Y, 2C, 2M, and a second driver for driving the black image carrier 2BK may employ a DC brushless motor, which are similar to the image forming apparatus 1 in FIG. 1. Thereby the drivers (e.g., motors) included in the image forming apparatus 100 can be also controlled with the above-method explained with FIG. 5, 6A, and 6B.

Numerous additional modifications and variations are possible in light of the above teachings. It is therefore to be understood that within the scope of the appended claims, the disclosure of the present invention may be practiced otherwise than as specifically described herein.

This application claims priority from Japanese patent application No. 2004-113753 filed on April 8, 2004 in the Japan Patent Office.

## Claims

1. An image forming apparatus (1), having a configuration to select a full-color mode and a monochrome mode, comprising:
at least one color image carrier (2Y, 2C, 2M) configured to rotate in a first direction to carry a color toner image thereon;
a black image carrier (2BK) configured to rotate in the first direction to carry a black toner image thereon;
a transfer member (3) configured to receive the color toner image and the black toner image thereon for the full-color mode, or the black toner image thereon for the monochrome mode;
a first driver (M1) configured to drive the at least one color image carrier;
a second driver (M2) configured to drive the black image carrier; and
a controller (30) configured to control the first driver and the second driver,
wherein, in a case of the full-color mode, the controller controls the first driver and the second driver to stop the at least one color image carrier and the black image carrier after transferring the toner image to the transfer member,
**characterized in that** the controller further controls the first driver and the second driver to rotate the at least one color image carrier and the black image carrier in a second direction, opposite to the first direction, and to conduct a phase aligning between the at least one color image carrier and the black image carrier when the at least one color image carrier and the black image carrier rotate in said second direction in order to maintain a predetermined phase relationship between the at least one color image carrier and the black image carrier.

2. An image forming apparatus (1), having a configuration to select a full-color mode and a monochrome mode, comprising:
at least one color image carrier (2Y, 2C, 2M) configured to rotate in a first direction to carry a color toner image thereon;
a black image carrier (2BK) configured to rotate in the first direction to carry a black toner image thereon;
a transfer member (3) configured to receive the color toner image and the black toner image thereon for the full-color mode, or the black toner image thereon for the monochrome mode;
a first driver (M1) configured to drive the at least one color image carrier;
a second driver (M2) configured to drive the black image carrier; and
a controller (30) configured to control the first driver and the second driver,
wherein, in a case of the monochrome mode, the controller controls the second driver to stop the black image carrier after transferring the toner image to the transfer member, **characterised in that** the controller further controls the second driver to rotate the black image carrier in a second direction, opposite to the first direction, and to conduct a phase aligning between the at least one color image carrier and the black image carrier when the black image carrier rotates in said second direction in order to maintain a predetermined phase relationship between the at least one color image carrier and the black image carrier.

3. The image forming apparatus according to either Claim 1 or Claim 2, the controller (30) is provided with a memory (33), storing data for a rotation in the first direction and a rotation in the second direction.

4. The image forming apparatus according to claim 3, wherein the at least one color image carrier (2Y, 2C, 2M) stops rotating and disengages from the transfer member (3) when conducting the monochrome mode.

5. The image forming apparatus according to any one of claims 1 to 4, wherein the controller (30) conducts the phase aligning after transferring the toner image with either one of the full-color mode or the monochrome mode.

6. The image forming apparatus according to any one of claims 1 to 5, wherein the controller (30) conducts the phase aligning while differentiating respective stop position of the at least one color image carrier (2Y, 2C, 2M) and black image carrier (2BK), at which the at least one color image carrier and black image carrier stop rotating in the second direction, from respective start position of the at least one color image carrier and black image carrier, at which the color image carrier and the black image carrier start to rotate for forming the toner image, while maintaining the predetermined phase relationship between the at least one color image carrier and the black image carrier.

7. The image forming apparatus according to any one of claims 1 to 6, wherein the transfer member (3) includes an intermediate transfer member.

8. The image forming apparatus according to any one of claims 1 to 7, wherein the transfer member further comprises a recording medium.

9. The image forming apparatus according to claim 8, further comprising a recording medium transporter configured to transport the recording medium.

10. The image forming apparatus according to any one of claims 1 to 9, wherein the first driver (M1) and the second driver (M2) include either one of a DC (direct current) brushless motor or a stepping motor.

11. The image forming apparatus according to any one of claims 1 to 10, further comprising a first gear (23Y, 23C, 23M) coupled to the at least one color image carrier (2Y, 2C, 2M) and configured to drive the at least one color image carrier.

12. The image forming apparatus according to any one of claims 1 to 11, further comprising a second gear (23BK) coupled to the black image carrier (28K) and configured to drive the black image carrier.

13. The image forming apparatus according to either claim 11 or claim 12, wherein the first gear (23Y, 23C, 23M) is driven by the first driver (M1).

14. The image forming apparatus according to either claim 12 or claim 13, wherein the second gear (2BK) is driven by the second driver (M2).

15. The image forming apparatus according to any one of claims 1 to 14, wherein the controller (30) controls the first driver (M1) and the second driver (M2) by gradually increasing pulse numbers of clock signals when the first driver and the second driver are activated.

16. The image forming apparatus according to any one of claims 1 to 15, wherein the controller (30) further controls the first driver (M1) and the second driver (M2) by stabilizing pulse numbers of clock signals when the first driver and the second driver enters in a stable condition.

17. The image forming apparatus according to any one of claims 1 to 16, wherein the controller (30) further controls the first driver (M1) and the second driver (M2) by gradually decreasing pulse numbers of clock signals when the first driver and the second driver are deactivated.

18. A method of preventing an image displacement in an image produced with an image forming apparatus (1) having a configuration to select a full-color mode and a monochrome mode, the method comprising the steps of:
providing a first driving mechanism and a second driving mechanism, the first driving mechanism being configured to drive a plurality of color image carriers (2Y, 2C, 2M) coupled to a plurality of gears (23Y, 23C, 23M) with a first driver (M1), and the second driving mechanism being configured to drive a black image carrier (2BK) coupled to a gear (23BK) with a second driver (M2);
selecting the monochrome mode for an image forming operation;
disengaging the first driving mechanism from the image forming operation;
performing the image forming operation with the second driving mechanism while rotating the black image carrier in a first direction;
stopping the second driving mechanism;
**characterized by**
driving the second driver to rotate the black image carrier in a second direction, opposite to the first direction;
increasing a revolution speed of the second driver step-wisely;
sensing a feeler provided to the gear coupled to the black image carrier; and
stabilizing the revolution speed of the second driver;
decreasing the revolution speed of the second driver step-wisely after a predetermined time has passed from the sensing step to stop the second driver so that the color image carriers and the black image carrier come to positions that release a predetermined phase relationship.

19. The method according to claim 18, wherein a controller (30) is configured to control the selecting step, the disengaging step, the performing step, the stopping step, the driving step, the increasing step, the stabilizing step, the sensing step, and the decreasing step.

20. The method according to Claim 19, wherein the controller (30) is provided with a memory, storing data at least for the increasing step, the stabilizing step, and the decreasing step.

21. The method according to any one of claims 18 to 20, further comprising a sensor configured to detect the feeler at the sensing step.

22. A method of preventing an image displacement in an image produced with an image forming apparatus (1) having a configuration to select a full-color mode and a monochrome mode, the method comprising the steps of:
providing a first driving mechanism and a second driving mechanism, the first driving mechanism being configured to drive a plurality of color image carriers (2Y, 2C, 2M) coupled to a plurality of gears (23Y, 23C, 23M) with a first driver (M1), and the second driving mechanism being configured to drive a black image carrier (2BK) coupled to a gear (23BK) with a second driver (M2);
selecting the full-color mode for an image forming operation;
performing the image forming operation with the first driving mechanism and the second driving mechanism while rotating the plurality of color image carriers and the black image carrier in a first direction;
stopping the first driving mechanism and the second driving mechanism;
**characterized by**
driving the first driving mechanism and the second driving mechanism to rotate the plurality of color image carriers and the black image carrier in a second direction, opposite to the first direction;
increasing a revolution speed of the first driver and the second driver step-wisely;
stabilizing the revolution speed of the first driver and the second driver;
sensing a feeler provided to at least one of the plurality of gears coupled to the plurality of color image carriers, and another feeler provided to the gear coupled to the black image carrier; and
in a case of full-color mode, decreasing the revolution speed of the first driver and the second driver step-wisely after a predetermined time has passed from the sensing step to stop the first driver and the second driver so that the color image carriers and the black image carrier come to positions that realize a predetermined phase relationship.

23. A computer program comprising program code means that, when executed on a computer system, instructs an image forming apparatus to carry out the steps according to any one of claims 18 to 22.

24. A computer readable storage medium having recorded thereon program code means that, when executed on a computer system, instructs an image forming apparatus to carry out the steps according to any one of claims 18 to 22.

## Patentansprüche

1. Bilderzeugungsvorrichtung (1), die eine Konfiguration zum Auswählen einer Vollfarbbetriebsart und einer Schwarzweißbetriebsart aufweist, wobei die Bilderzeugungsvorrichtung umfasst:
wenigstens einen Farbbildträger (2Y, 2C, 2M), der zum Drehen in einer ersten Richtung zum Tragen eines Farbtonerbilds darauf konfiguriert ist;
einen Schwarzbildträger (2BK), der zum Drehen in der ersten Richtung zum Tragen eines Schwarztonerbilds darauf konfiguriert ist;
ein Übertragungselement (3), das zum Empfangen des Farbtonerbilds und des Schwarztonerbilds darauf für die Vollfarbbetriebsart oder des Schwarztonerbilds darauf für die Schwarzweißbetriebsart konfiguriert ist;
eine erste Antriebseinrichtung (M1), die zum Antreiben des wenigstens einen Farbbildträgers konfiguriert ist;
eine zweite Antriebseinrichtung (M2), die zum Antreiben des Schwarzbildträgers konfiguriert ist; und
eine Steuereinheit (30), die zum Steuern der ersten Antriebseinrichtung und der zweiten Antriebseinrichtung konfiguriert ist,
wobei im Fall der Vollfarbbetriebsart die Steuereinheit die erste Antriebseinrichtung und die zweite Antriebseinrichtung zum Anhalten des wenigstens einen Farbbildträgers und des Schwarzbildträgers nach Übertragen des Tonerbilds auf das Übertragungselement steuert, **dadurch gekennzeichnet, dass** die Steuereinheit ferner die erste Antriebseinrichtung und die zweite Antriebseinrichtung zum Drehen des wenigstens einen Farbbildträgers und des Schwarzbildträgers in einer zweiten Richtung, die zu der ersten Richtung entgegengesetzt ist, und zum Durchführen einer Phasenausrichtung zwischen dem wenigstens einen Farbbildträger und dem Schwarzbildträger steuert, wenn sich der wenigstens eine Farbbildträger und der Schwarzbildträger in der zweiten Richtung drehen, um eine vorgegebene Phasenbeziehung zwischen dem wenigstens einen Farbbildträger und dem Schwarzbildträger aufrechtzuerhalten.

2. Bilderzeugungsvorrichtung (1), die eine Konfiguration zum Auswählen einer Vollfarbbetriebsart und einer Schwarzweißbetriebsart aufweist, wobei die Bilderzeugungsvorrichtung umfasst:
wenigstens einen Farbbildträger (2Y, 2C, 2M), der zum Drehen in einer ersten Richtung zum Tragen eines Farbtonerbilds darauf konfiguriert ist;
einen Schwarzbildträger (2BK), der zum Drehen in der ersten Richtung zum Tragen eines Schwarztonerbilds darauf konfiguriert ist;
ein Übertragungselement (3), das zum Empfangen des Farbtonerbilds und des Schwarztonerbilds darauf für die Vollfarbbetriebsart oder des Schwarztonerbilds darauf für die Schwarzweißbetriebsart konfiguriert ist;
eine erste Antriebseinrichtung (M1), die zum Antreiben des wenigstens einen Farbbildträgers konfiguriert ist;
eine zweite Antriebseinrichtung (M2), die zum Antreiben des Schwarzbildträgers konfiguriert ist; und
eine Steuereinheit (30), die zum Steuern der ersten Antriebseinrichtung und der zweiten Antriebseinrichtung konfiguriert ist,
wobei im Fall der Schwarzweißbetriebsart die Steuereinheit die zweite Antriebseinrichtung zum Anhalten des Schwarzbildträgers nach Übertragen des Tonerbilds auf das Übertragungselement steuert, **dadurch gekennzeichnet, dass** die Steuereinheit ferner die zweite Antriebseinrichtung zum Drehen des Schwarzbildträgers in einer zweiten Richtung, die zu der ersten Richtung entgegengesetzt ist, und zum Durchführen einer Phasenausrichtung zwischen dem wenigstens einen Farbbildträger und dem Schwarzbildträger steuert, wenn sich der Schwarzbildträger in der zweiten Richtung dreht, um eine vorgegebene Phasenbeziehung zwischen dem wenigstens einen Farbbildträger und dem Schwarzbildträger aufrechtzuerhalten.

3. Bilderzeugungsvorrichtung entweder nach Anspruch 1 oder nach Anspruch 2, wobei die Steuereinheit (30) mit einem Speicher (33) versehen ist, der Daten für eine Drehung in der ersten Richtung und für eine Drehung in der zweiten Richtung speichert.

4. Bilderzeugungsvorrichtung nach Anspruch 3, wobei der wenigstens eine Farbbildträger (2Y, 2C, 2M) seine Drehung beendet und von dem Übertragungselement (3) löst, wenn die Schwarzweißbetriebsart durchgeführt wird.

5. Bilderzeugungsvorrichtung nach einem der Ansprüche 1 bis 4, wobei die Steuereinheit (30) die Phasenausrichtung nach Übertragung des Tonerbilds entweder mit der Vollfarbbetriebsart oder mit der Schwarzweißbetriebsart durchführt.

6. Bilderzeugungsvorrichtung nach einem der Ansprüche 1 bis 5, wobei die Steuereinheit (30) die Phasenausrichtung während unterschiedlicher jeweiliger Haltepositionen des wenigstens einen Farbbildträgers (2Y, 2C, 2M) und des Schwarzbildträgers (2BK) durchführt, in der sich der wenigstens eine Farbbildträger und der Schwarzbildträgervonder jeweiligen Startposition des wenigstens einen Farbbildträgers und des Schwarzbildträgers, wobei der Farbbildträger und der Schwarzbildträger beginnen sich zu drehen, um das Tonerbild zu erzeugen,in der zweiten Richtung aufhören sich zu drehen, während die vorgegebene Phasenbeziehung zwischen dem wenigstens einen Farbbildträger und dem Schwarzbildträger aufrechterhalten wird.

7. Bilderzeugungsvorrichtung nach einem der Ansprüche 1 bis 6, wobei das Übertragungselement (3) ein Zwischenübertragungselement enthält.

8. Bilderzeugungsvorrichtung nach einem der Ansprüche 1 bis 7, wobei das Übertragungselement ferner ein Aufzeichnungsmedium umfasst.

9. Bilderzeugungsvorrichtung nach Anspruch 8, die ferner eine Aufzeichnungsmedium-Transporteinrichtung umfasst, die zum Transportieren des Aufzeichnungsmediums konfiguriert ist.

10. Bilderzeugungsvorrichtung nach einem der Ansprüche 1 bis 9, wobei die erste Antriebseinrichtung (M1) und die zweite Antriebseinrichtung (M2) entweder einen bürstenlosen DC-Motor (Gleichstrommotor) oder einen Schrittmotor enthalten.

11. Bilderzeugungsvorrichtung nach einem der Ansprüche 1 bis 10, die ferner ein erstes Zahnrad (23Y, 23C, 23M) umfasst, das mit dem wenigstens einen Farbbildträger (2Y, 2C, 2M) gekoppelt ist und zum Antreiben des wenigstens einen Farbbildträgers konfiguriert ist.

12. Bilderzeugungsvorrichtung nach einem der Ansprüche 1 bis 11, die ferner ein zweites Zahnrad (23BK) umfasst, das mit dem Schwarzbildträger (28K) gekoppelt ist und zum Antreiben des Schwarzbildträgers konfiguriert ist.

13. Bilderzeugungsvorrichtung entweder nach Anspruch 11 oder nach Anspruch 12, wobei das erste Zahnrad (23Y, 23C, 23M) durch die erste Antriebseinrichtung (M1) angetrieben wird.

14. Bilderzeugungsvorrichtung entweder nach Anspruch 12 oder nach Anspruch 13, wobei das zweite Zahnrad (2BK) durch die zweite Antriebseinrichtung (M2) angetrieben wird.

15. Bilderzeugungsvorrichtung nach einem der Ansprüche 1 bis 14, wobei die Steuereinheit (30) die erste Antriebseinrichtung (M1) und die zweite Antriebseinrichtung (M2) durch allmähliches Erhöhen der jeweiligen Impulsanzahl von Taktsignalen steuert, wenn die erste Antriebseinrichtung und die zweite Antriebseinrichtung aktiviert werden.

16. Bilderzeugungsvorrichtung nach einem der Ansprüche 1 bis 15, wobei die Steuereinheit (30) ferner die erste Antriebseinrichtung (M1) und die zweite Antriebseinrichtung (M2) durch Stabilisieren der jeweiligen Impulsanzahl von Taktsignalen steuert, wenn die erste Antriebseinrichtung und die zweite Antriebseinrichtung in einen stabilen Zustand eintreten.

17. Bilderzeugungsvorrichtung nach einem der Ansprüche 1 bis 16, wobei die Steuereinheit (30) ferner die erste Antriebseinrichtung (M1) und die zweite Antriebseinrichtung (M2) durch allmähliches Verringern der jeweiligen Impulsanzahl der Taktsignale steuert, wenn die erste Antriebseinrichtung und die zweite Antriebseinrichtung deaktiviert werden.

18. Verfahren zum Verhindern einer Bildverlagerung in einem Bild, das mit einer Bilderzeugungsvorrichtung (1) erzeugt wird, die eine Konfiguration zum Auswählen einer Vollfarbbetriebsart und einer Schwarzweißbetriebsart aufweist, wobei das Verfahren die folgenden Schritte umfasst:
Bereitstellen eines ersten Antriebsmechanismus und eines zweiten Antriebsmechanismus, wobei der erste Antriebsmechanismus zum Antreiben mehrerer Farbbildträger (2Y, 2C, 2M), die mit mehreren Zahnrädern (23Y, 23C, 23M) gekoppelt sind, mit einer ersten Antriebseinrichtung (M1) konfiguriert ist, und wobei der zweite Antriebsmechanismus zum Antreiben eines Schwarzbildträgers (2BK), der mit einem Zahnrad (23BK) gekoppelt ist, mit einer zweiten Antriebseinrichtung (M2) konfiguriert ist;
Auswählen der Schwarzweißbetriebsart für eine Bilderzeugungsoperation;
Lösen des ersten Antriebsmechanismus von der Bilderzeugungsoperation;
Ausführen der Bilderzeugungsoperation mit dem zweiten Antriebsmechanismus, während der Schwarzbildträger in einer ersten Richtung gedreht wird;
Anhalten des zweiten Antriebsmechanismus;
**gekennzeichnet durch**
Antreiben der zweiten Antriebseinrichtung zum Drehen des Schwarzbildträgers in einer zweiten Richtung, die zu der ersten Richtung entgegengesetzt ist;
schrittweises Erhöhen einer Umdrehungsgeschwindigkeit der zweiten Antriebseinrichtung;
Stabilisieren der Umdrehungsgeschwindigkeit der zweiten Antriebseinrichtung;
Abtasten eines Fühlers, der für das mit dem Schwarzbildträger gekoppelte Zahnrad vorgesehen ist; und
schrittweises Verringern der Umdrehungsgeschwindigkeit der zweiten Antriebseinrichtung, nachdem eine vorgegebene Zeit von dem Abtastschritt verstrichen ist, bis zum Anhalten der zweiten Antriebseinrichtung, sodass die Farbbildträger und der Schwarzbildträger an Positionen gelangen, die eine vorgegebene Phasenbeziehung realisieren.

19. Verfahren nach Anspruch 18, bei dem eine Steuereinheit (30) zum Steuern des Auswahlschritts, des Löseschritts, des Ausführungsschritts, des Anhalteschritts, des Antriebsschritts, des Erhöhungsschritts, des Stabilisierungsschritts, des Abtastschritts und des Verringerungsschritts konfiguriert ist.

20. Verfahren nach Anspruch 19, bei dem die Steuereinheit (30) mit einem Speicher versehen ist, der Daten wenigstens für den Erhöhungsschritt, für den Stabilisierungsschritt und für den Verringerungsschritt speichert.

21. Verfahren nach einem der Ansprüche 18 bis 20, das ferner einen Sensor umfasst, der zum Erfassen des Fühlers in dem Abtastschritt konfiguriert ist.

22. Verfahren zum Verhindern einer Bildverlagerung in einem Bild, das mit einer Bilderzeugungsvorrichtung (1) erzeugt wird, die eine Konfiguration zum Auswählen einer Vollfarbbetriebsart und einer Schwarzweißbetriebsart aufweist, wobei das Verfahren die folgenden Schritte umfasst:
Bereitstellen eines ersten Antriebsmechanismus und eines zweiten Antriebsmechanismus, wobei der erste Antriebsmechanismus zum Antreiben mehrerer Farbbildträger (2Y, 2C, 2M), die mit mehreren Zahnrädern (23Y, 23C, 23M) gekoppelt sind, mit einer ersten Antriebseinrichtung (M1) konfiguriert ist, und wobei der zweite Antriebsmechanismus zum Antreiben eines Schwarzbildträgers (2BK), der mit einem Zahnrad (23BK) gekoppelt ist, mit einer zweiten Antriebseinrichtung (M2) konfiguriert ist;
Auswählen der Vollfarbbetriebsart für eine Bilderzeugungsoperation;
Ausführen der Bilderzeugungsoperation mit demerstenAntriebsmechanismus und mit demzweiten Antriebsmechanismus, während die mehreren Farbbildträger und der Schwarzbildträger in einer ersten Richtung gedreht werden;
Anhalten des ersten Antriebsmechanismus und des zweitenAntriebsmechanismus;
**gekennzeichnet durch**
Antreiben des ersten Antriebsmechanismus und des zweiten Antriebsmechanismus zum Drehen der mehreren Farbbildträger und des Schwarzbildträgers in einer zweiten Richtung, die zu der ersten Richtung entgegengesetzt ist;
schrittweises Erhöhen einer Umdrehungsgeschwindigkeit der ersten Antriebseinrichtung und der zweiten Antriebseinrichtung;
Stabilisieren der Umdrehungsgeschwindigkeit der ersten Antriebseinrichtung und der zweiten Antriebseinrichtung;
Abtasten eines Fühlers, der für wenigstens eines der mehreren mit den mehreren Farbbildträgern gekoppelten Zahnräder vorgesehen ist, und eines weiteren Fühlers, der für das mit dem Schwarzbildträger gekoppelte Zahnrad vorgesehen ist; und
im Fall der Vollfarbbetriebsart, schrittweises Verringern der Umdrehungsgeschwindigkeit der ersten Antriebseinrichtung und der zweiten Antriebseinrichtung,nachdem eine vorgegebene Zeit von dem Abtastschritt verstrichen ist, bis zum Anhalten der ersten Antriebseinrichtung und der zweiten Antriebseinrichtung, sodass die Farbbildträger und der Schwarzbildträger an Positionen gelangen, die eine vorgegebene Phasenbeziehung realisieren.

23. Computerprogramm, das Programmcodemittel umfasst, die, wenn sie auf einem Computersystem ausgeführt werden, eine Bilderzeugungsvorrichtunganweisen, die Schritte nach einem der Ansprüche 18 bis 22 auszuführen.

24. Computerlesbares Speichermedium, auf dem Programmcodemittel aufgezeichnet sind, die, wenn sie auf einem Computersystem ausgeführt werden, eine Bilderzeugungsvorrichtung anweisen, die Schritte nach einem der Ansprüche 18 bis 22 auszuführen.

## Revendications

1. Appareil de formation d'image (1), ayant une configuration pour sélectionner un mode en couleur et un mode monochrome, comprenant :
au moins un support d'image en couleur (2Y, 2C, 2M) configuré pour tourner dans une première direction pour supporter une image de toner de couleur sur celui-ci ;
un support d'image en noir (2BK) configuré pour tourner dans la première direction pour supporter une image de toner noir sur celui-ci ;
un élément de transfert (3) configuré pour recevoir l'image de toner de couleur et l'image de toner noir sur celui-ci pour le mode en couleur, ou l'image de toner noir sur celui-ci pour le mode monochrome ;
un premier dispositif d'entraînement (M1) configuré pour entraîner ledit au moins un support d'image en couleur ;
un deuxième dispositif d'entraînement (M2) configuré pour entraîner le support d'image en noir ; et
un contrôleur (30) configuré pour commander le premier dispositif d'entraînement et le deuxième dispositif d'entraînement,
dans lequel, dans un cas du mode en couleur, le contrôleur commande le premier dispositif d'entraînement et le deuxième dispositif d'entraînement pour arrêter ledit au moins un support d'image en couleur et le support d'image en noir après le transfert de l'image de toner sur l'élément de transfert,
**caractérisé en ce que** le contrôleur commande en outre le premier dispositif d'entraînement et le deuxième dispositif d'entraînement pour faire tourner ledit au moins un support d'image en couleur et le support d'image en noir dans une deuxième direction, opposée à la première direction, et pour effectuer un alignement de phase entre ledit au moins un support d'image en couleur et le support d'image en noir lorsque ledit au moins un support d'image en couleur et le support d'image en noir tournent dans ladite deuxième direction afin de maintenir une relation de phase prédéterminée entre ledit au moins un support d'image en couleur et le support d'image en noir.

2. Appareil de formation d'image (1), ayant une configuration pour sélectionner un mode en couleur et un mode monochrome, comprenant :
au moins un support d'image en couleur (2Y, 2C, 2M) configuré pour tourner dans une première direction pour supporter une image de toner de couleur sur celui-ci ;
un support d'image en noir (2BK) configuré pour tourner dans la première direction pour supporter une image de toner noir sur celui-ci ;
un élément de transfert (3) configuré pour recevoir l'image de toner de couleur et l'image de toner noir sur celui-ci pour le mode en couleur, ou l'image de toner noir sur celui-ci pour le mode monochrome ;
un premier dispositif d'entraînement (M1) configuré pour entraîner ledit au moins un support d'image en couleur ;
un deuxième dispositif d'entraînement (M2) configuré pour entraîner le support d'image en noir ; et
un contrôleur (30) configuré pour commander le premier dispositif d'entraînement et le deuxième dispositif d'entraînement,
dans lequel, dans un cas du mode monochrome, le contrôleur commande le deuxième dispositif d'entraînement pour arrêter le support d'image en noir après le transfert de l'image de toner sur l'élément de transfert,
**caractérisé en ce que** le contrôleur commande en outre le deuxième dispositif d'entraînement pour faire tourner le support d'image en noir dans une deuxième direction, opposée à la première direction, et pour effectuer un alignement de phase entre ledit au moins un support d'image en couleur et le support d'image en noir lorsque le support d'image en noir tourne dans ladite deuxième direction afin de maintenir une relation de phase prédéterminée entre ledit au moins un support d'image en couleur et le support d'image en noir.

3. Appareil de formation d'image selon l'une ou l'autre de la revendication 1 ou de la revendication 2, le contrôleur (30) étant pourvu d'une mémoire (33), mémorisant des données pour une rotation dans la première direction et une rotation dans la deuxième direction.

4. Appareil de formation d'image selon la revendication 3, dans lequel ledit au moins un support d'image en couleur (2Y, 2C, 2M) cesse de tourner et se désengage de l'élément de transfert (3) lors de l'exécution du mode monochrome.

5. Appareil de formation d'image selon l'une quelconque des revendications 1 à 4, dans lequel le contrôleur (30) effectue l'alignement de phase après un transfert de l'image de toner par l'un ou l'autre du mode en couleur ou du mode monochrome.

6. Appareil de formation d'image selon l'une quelconque des revendications 1 à 5, dans lequel le contrôleur (30) effectue l'alignement de phase tout en différenciant une position d'arrêt respective dudit au moins un support d'image en couleur (2Y, 2C, 2M) et du support d'image en noir (2BK), à laquelle ledit au moins un support d'image en couleur et le support d'image en noir cessent de tourner dans la deuxième direction, d'une position de début respective dudit au moins un support d'image en couleur et du support d'image en noir, à laquelle le support d'image en couleur et le support d'image en noir commencent à tourner pour former l'image de toner, tout en maintenant la relation de phase prédéterminée entre ledit au moins un support d'image en couleur et le support d'image en noir.

7. Appareil de formation d'image selon l'une quelconque des revendications 1 à 6, dans lequel l'élément de transfert (3) comprend un élément de transfert intermédiaire.

8. Appareil de formation d'image selon l'une quelconque des revendications 1 à 7, dans lequel l'élément de transfert comprend en outre un support d'enregistrement.

9. Appareil de formation d'image selon la revendication 8, comprenant en outre un dispositif de transport de support d'enregistrement configuré pour transporter le support d'enregistrement.

10. Appareil de formation d'image selon l'une quelconque des revendications 1 à 9, dans lequel le premier dispositif d'entraînement (M1) et le deuxième dispositif d'entraînement (M2) comprennent l'un ou l'autre d'un moteur sans balais continu (DC) ou d'un moteur pas à pas.

11. Appareil de formation d'image selon l'une quelconque des revendications 1 à 10, comprenant en outre un premier engrenage (23Y, 23C, 23M) couplé audit au moins un support d'image en couleur (2Y, 2C, 2M) et configuré pour entraîner ledit au moins un support d'image en couleur.

12. Appareil de formation d'image selon l'une quelconque des revendications 1 à 11, comprenant en outre un deuxième engrenage (23BK) couplé au support d'image en noir (28K) et configuré pour entraîner le support d'image en noir.

13. Appareil de formation d'image selon l'une ou l'autre de la revendication 11 ou de la revendication 12, dans lequel le premier engrenage (23Y, 23C, 23M) est entraîné par le premier dispositif d'entraînement (M1).

14. Appareil de formation d'image selon l'une ou l'autre de la revendication 12 ou de la revendication 13, dans lequel le deuxième engrenage (2BK) est entraîné par le deuxième dispositif d'entraînement (M2).

15. Appareil de formation d'image selon l'une quelconque des revendications 1 à 14, dans lequel le contrôleur (30) commande le premier dispositif d'entraînement (M1) et le deuxième dispositif d'entraînement (M2) en augmentant graduellement les nombres d'impulsions de signaux d'horloge lorsque le premier dispositif d'entraînement et le deuxième dispositif d'entraînement sont activés.

16. Appareil de formation d'image selon l'une quelconque des revendications 1 à 15, dans lequel le contrôleur (30) commande en outre le premier dispositif d'entraînement (M1) et le deuxième dispositif d'entraînement (M2) en stabilisant les nombres d'impulsions des signaux d'horloge lorsque le premier dispositif d'entraînement et le deuxième dispositif d'entraînement entrent dans une condition stable.

17. Appareil de formation d'image selon l'une quelconque des revendications 1 à 16, dans lequel le contrôleur (30) commande en outre le premier dispositif d'entraînement (M1) et le deuxième dispositif d'entraînement (M2) en diminuant graduellement les nombres d'impulsions des signaux d'horloge lorsque le premier dispositif d'entraînement et le deuxième dispositif d'entraînement sont désactivés.

18. Procédé pour éviter un déplacement d'image dans une image produite par un appareil de formation d'image (1) ayant une configuration pour sélectionner un mode en couleur et un mode monochrome, le procédé comprenant les étapes consistant à :
prévoir un premier mécanisme d'entraînement et un deuxième mécanisme d'entraînement, le premier mécanisme d'entraînement étant configuré pour entraîner une pluralité de supports d'image en couleur (2Y, 2C, 2M) couplés à une pluralité d'engrenages (23Y, 23C, 23M) par un premier dispositif d'entraînement (M1), et le deuxième mécanisme d'entraînement étant configuré pour entraîner un support d'image en noir (2BK) couplé à un engrenage (23BK) par un deuxième dispositif d'entraînement (M2) ;
sélectionner le mode monochrome pour une opération de formation d'image ;
désengager le premier mécanisme d'entraînement de l'opération de formation d'image ;
effectuer l'opération de formation d'image avec le deuxième mécanisme d'entraînement tout en faisant tourner le support d'image en noir dans une première direction ;
arrêter le deuxième mécanisme d'entraînement ;
**caractérisé par** les étapes consistant à :
commander le deuxième dispositif d'entraînement pour faire tourner le support d'image en noir dans une deuxième direction, opposée à la première direction ;
augmenter une vitesse de rotation du deuxième dispositif d'entraînement par étape ;
stabiliser la vitesse de rotation du deuxième dispositif d'entraînement ;
détecter un palpeur prévu pour l'engrenage couplé au support d'image en noir ; et
diminuer la vitesse de rotation du deuxième dispositif d'entraînement par étape après qu'un temps prédéterminé s'est écoulé depuis l'étape de détection pour arrêter le deuxième dispositif d'entraînement de sorte que les supports d'image en couleur et le support d'image en noir arrivent à des positions qui libèrent une relation de phase prédéterminée.

19. Procédé selon la revendication 18, dans lequel un contrôleur (30) est configuré pour commander l'étape de sélection, l'étape de désengagement, l'étape d'exécution, l'étape d'arrêt, l'étape de commande, l'étape d'augmentation, l'étape de stabilisation, l'étape de détection et l'étape de diminution.

20. Procédé selon la revendication 19, dans lequel le contrôleur (30) est pourvu d'une mémoire, mémorisant des données au moins pour l'étape d'augmentation, l'étape de stabilisation et l'étape de diminution.

21. Procédé selon l'une quelconque des revendications 18 à 20, comprenant en outre un capteur configuré pour détecter le palpeur à l'étape de détection.

22. Procédé pour éviter un déplacement d'image dans une image produite avec un appareil de formation d'image (1) ayant une configuration pour sélectionner un mode en couleur et un mode monochrome, le procédé comprenant les étapes consistant à :
prévoir un premier mécanisme d'entraînement et un deuxième mécanisme d'entraînement, le premier mécanisme d'entraînement étant configuré pour entraîner une pluralité de supports d'image en couleur (2Y, 2C, 2M) couplés à une pluralité d'engrenages (23Y, 23C, 23M) par un premier dispositif d'entraînement (M1), et le deuxième mécanisme d'entraînement étant configuré pour entraîner un support d'image en noir (2BK) couplé à un engrenage (23BK) par un deuxième dispositif d'entraînement (M2) ;
sélectionner le mode en couleur pour une opération de formation d'image ;
effectuer l'opération de formation d'image avec le premier mécanisme d'entraînement et le deuxième mécanisme d'entraînement tout en faisant tourner la pluralité de supports d'image en couleur et le support d'image en noir dans une première direction ;
arrêter le premier mécanisme d'entraînement et le deuxième mécanisme d'entraînement ;
**caractérisé par** les étapes consistant à :
commander le premier mécanisme d'entraînement et le deuxième mécanisme d'entraînement pour faire tourner la pluralité de supports d'image en couleur et le support d'image en noir dans une deuxième direction, opposée à la première direction ;
augmenter une vitesse de rotation du premier dispositif d'entraînement et du deuxième dispositif d'entraînement par étape ;
stabiliser la vitesse de rotation du premier dispositif d'entraînement et du deuxième dispositif d'entraînement ;
détecter un palpeur prévu sur au moins l'un de la pluralité d'engrenages couplés à la pluralité de supports d'image en couleur, et un autre palpeur prévu sur l'engrenage couplé au support d'image en noir ; et
dans un cas d'un mode en couleur, diminuer la vitesse de rotation du premier dispositif d'entraînement et du deuxième dispositif d'entraînement par étape après qu'un temps prédéterminé s'est écoulé depuis l'étape de détection pour arrêter le premier dispositif d'entraînement et le deuxième dispositif d'entraînement de sorte que les supports d'image en couleur et le support d'image en noir arrivent à des positions qui réalisent une relation de phase prédéterminée.

23. Programme d'ordinateur comprenant des moyens formant code de programme qui, lorsqu'ils sont exécutés sur un système informatique, ordonnent à un appareil de formation d'image d'effectuer les étapes selon l'une quelconque des revendications 18 à 22.

24. Support de mémorisation pouvant être lu par un ordinateur sur lequel sont enregistrés des moyens formant code de programme qui, lorsqu'ils sont exécutés sur un système informatique, ordonnent à un appareil de formation d'image d'effectuer les étapes selon l'une quelconque des revendications 18 à 22.
